# DEMANDE DE BREVET EUROPEEN

(11) **EP 1 132 588 A1**
(43) Date de publication de la demande: **12.09.2001**
(21) Numéro de dépôt: 01400473.3
(22) Date de dépôt: 22.02.2001
(51) Int. Cl.: F01N 7/18, F16L 27/053, F16L 27/10

(54) **Agencement pour l'assemblage d'une ligne d'échappement**

(30) Priorité: 25.02.2000 FR 0002369
(71) Demandeur: Renault, 92100 Boulogne Billancourt (FR)
(72) Inventeur: Falaize, Roger, 91470 Les Molières (FR)

(57) **Abrégé**

L'invention propose un agencement (10) pour l'assemblage d'une ligne d'échappement de moteur à combustion d'un véhicule automobile comportant un collecteur d'échappement (12), une conduite (16) de descente d'échappement et une bride (36) du type rotulée qui maintient l'orifice d'entrée (18) de la conduite (16) de descente d'échappement en regard de l'orifice de sortie (14) du collecteur d'échappement (12), du type dans lequel le montage de la bride (36) sur la conduite (16) de descente d'échappement comporte au moins une tige (46) dont une extrémité axiale inférieure filetée (50) porte un écrou de serrage (52), avec interposition axiale d'un élément élastique de compression (54) entre l'écrou de serrage (52) et la bride (36), caractérisé en ce que l'écrou (52) est serti sur l'extrémité inférieure (60) de l'élément élastique (54), l'écrou (52) étant libre en rotation par rapport à l'élément élastique (54).

## Description

L'invention concerne un agencement pour l'assemblage d'une ligne d'échappement de moteur à combustion d'un véhicule automobile.

L'invention concerne plus particulièrement un agencement pour l'assemblage de la ligne d'échappement du moteur à combustion d'un véhicule automobile comportant un collecteur d'échappement, une conduite de descente d'échappement et une bride du type rotulée qui maintient l'orifice d'entrée de la conduite de descente d'échappement en regard de l'orifice de sortie du collecteur d'échappement, du type dans lequel le montage de la bride sur la conduite de descente d'échappement comporte au moins une tige dont une extrémité axiale inférieure filetée porte un écrou de serrage, avec interposition axiale d'un élément élastique de compression entre l'écrou de serrage et la bride.

Le système de liaison du collecteur d'échappement avec la conduite de descente d'échappement par bride rotulée est connu.

Ce système de liaison permet notamment de faire une économie importante sur la ligne d'échappement par rapport à une ligne d'échappement à bride plate et flexible.

Un inconvénient majeur de ce système de liaison est le nombre important de pièces qui complique les opérations d'approvisionnement et rend le montage difficile.

L'invention vise à remédier à ces inconvénients.

Dans ce but, l'invention propose un agencement du type décrit précédemment, caractérisé en ce que l'écrou est serti sur l'extrémité inférieure de l'élément élastique, l'écrou étant libre en rotation par rapport à l'élément élastique.

L'invention permet ainsi un montage plus facile pour l'opérateur, ce qui se traduit notamment par un gain de temps.

L'agencement selon l'invention comporte moins de pièces distinctes donc moins de références à gérer, notamment pour le service après-vente du véhicule.

Selon d'autres caractéristiques de l'invention :
- l'élément élastique est un ressort de compression, par exemple du type à boudin, et l'écrou est serti sur la spire d'extrémité inférieure au moyen d'une coupelle ; et
- la coupelle est sertie à l'intérieur de la spire.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale partielle qui représente un agencement d'assemblage de la ligne d'échappement du moteur à combustion d'un véhicule automobile réalisé conformément aux enseignements de l'invention ;
- la figure 2 est une vue agrandie d'un détail de la figure 1 qui représente un ressort à boudin et un écrou équipés d'une coupelle réalisée conformément aux enseignements de l'invention ; et
- la figure 3 est une vue en perspective éclatée des éléments représentés à la figure 2.

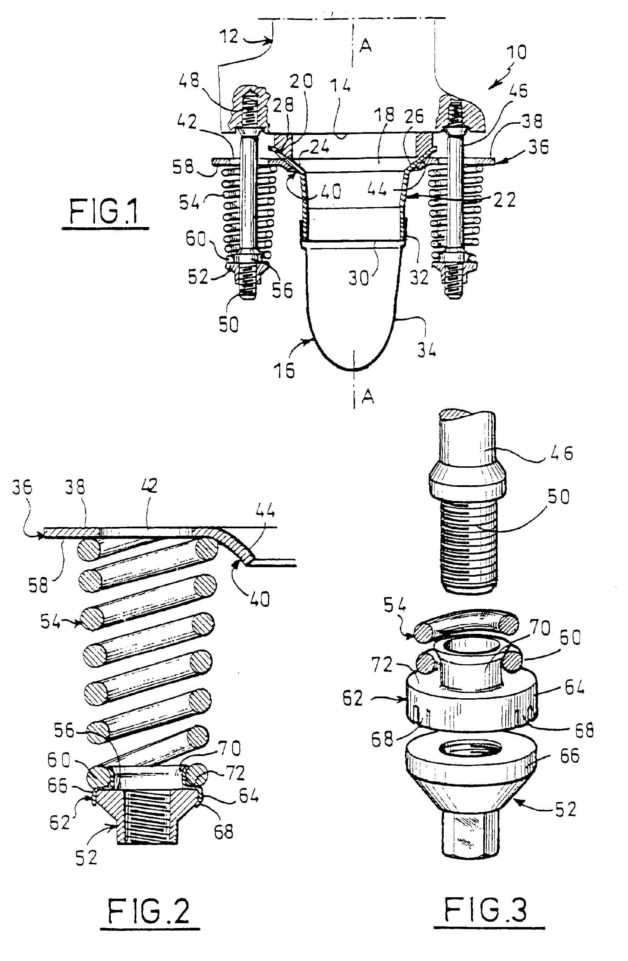

Dans la description qui va suivre, on utilisera à titre non limitatif une orientation verticale qui correspond à l'orientation de la figure 1 suivant l'axe A-A.

On a représenté à la figure 1 un agencement 10 pour l'assemblage d'une ligne d'échappement de moteur à combustion d'un véhicule automobile.

On a notamment représenté la portion du collecteur d'échappement 12 du moteur qui comporte l'orifice de sortie 14 pour l'évacuation des gaz d'échappement.

L'agencement 10 comporte une conduite 16 de descente d'échappement dont l'orifice d'entrée 18 est agencé en regard de l'orifice de sortie 14 du collecteur 12 suivant l'axe A-A.

Une bague 20 en matériau de type « Metex » (marque déposée) est interposée axialement entre le bord périphérique de l'orifice de sortie 14 et le tronçon d'extrémité axiale supérieure 22 de la conduite 16.

Plus précisément, le tronçon d'extrémité axiale supérieure 22 comporte à son extrémité supérieure une jupe globalement tronconique 24 de diamètre croissant vers le haut qui délimite sur sa paroi périphérique interne une portée tronconique 26.

La bague 20 comporte sur sa face d'extrémité axiale inférieure une portée tronconique 28 qui est complémentaire et en appui axial sur la portée tronconique 26 de la conduite 16.

Ici, le tronçon d'extrémité axiale supérieure 22 de la conduite 16 est une pièce rapportée dont l'extrémité axiale inférieure 30 est montée dans une jupe axiale 32 de la portion principale 34 de la conduite 16, par exemple par collage ou par sertissage.

Une bride rotulée 36 coaxiale est montée autour de la jupe tronconique 24 de la conduite 16 en vue de retenir axialement la conduite 16 contre la bague 20 et de maintenir l'orifice d'entrée 18 en regard de l'orifice de sortie 14 du collecteur 12.

La bride 36 est de forme annulaire d'axe A-A et elle délimite, de l'extérieur vers l'intérieur, un anneau 38 de surface plane et une jupe tronconique 40 de diamètre décroissant vers le bas.

L'anneau 38 est percé axialement de trous de montage 42 qui sont ici répartis angulairement de manière régulière.

La jupe tronconique 40 délimite sur sa face supérieure une surface de portée tronconique supérieure 44 qui est sensiblement complémentaire de la paroi périphérique externe de la jupe tronconique 24 de la conduite 16.

La bride 36 est montée sur la conduite 16 au moyen de tiges 46 parallèles à l'axe A-A qui traversent les trous de montage 42 et qui sont vissées par leurs extrémités axiales supérieures filetées 48 dans le collecteur 12.

Chaque tige 46 a son extrémité axiale inférieure filetée 50 sur laquelle est vissé un écrou de serrage 52 correspondant.

Un élément élastique de compression 54, ici un ressort à boudin, est interposé entre la face supérieure 56 de l'écrou 52 et la face inférieure 58 de la bride 36.

Ainsi, selon un fonctionnement classique, la bride rotulée 36 maintient élastiquement l'orifice d'entrée 18 de la conduite 16 en regard de l'orifice de sortie 14 du collecteur d'échappement 12, quels que soient les mouvements de la conduite 16 par rapport au collecteur d'échappement 12.

Les ressorts à boudin 54 amortissent les mouvements de la bride rotulée 36 et exercent une force de rappel sur celle-ci pour la rappeler vers sa position de repos, c'est à dire vers une position sensiblement transversale par rapport à l'axe A-A.

Conformément aux enseignements de l'invention, l'écrou 52 est serti sur la spire d'extrémité inférieure 60 au moyen d'une coupelle 62 que l'on peut voir représentée en détail sur les figures 2 et 3.

Comme on peut le voir sur ces deux figures, la coupelle 62 comporte une jupe axiale inférieure 64 qui est sertie sur un tronçon supérieur cylindrique 66 de l'écrou de serrage 52, de manière que l'écrou 52 soit libre en rotation dans le sertissage.

Avantageusement, la jupe axiale inférieure 64 est sertie au moyen de pattes de sertissage 68 découpées dans la jupe axiale inférieure 64 et réparties angulairement de manière régulière.

La coupelle 62 comporte aussi une jupe axiale supérieure 70 qui est sertie ici à l'intérieur de la spire d'extrémité inférieure 60 du ressort 54.

Les jupes axiales inférieure 64 et supérieure 70 sont reliées par une portion intermédiaire annulaire transversale 72 de la coupelle 62.

On note que, dans le mode de réalisation représenté ici, la portion transversale 72 est intercalée entre la spire d'extrémité inférieure 60 et la face supérieure 56 de l'écrou 52. Par conséquent, le ressort 54 ne s'appuie pas vers le bas directement sur la face supérieure 56 de l'écrou 52 mais sur la portion transversale 72.

Dans une variante de réalisation (non représentée) de l'invention, la coupelle 62 est sertie à l'extérieur de la spire d'extrémité inférieure 60 du ressort 54.

On décrira maintenant les opérations de montage de l'agencement d'assemblage selon l'invention.

Dans un premier temps l'écrou 52 est serti sur le ressort 54 au moyen de la coupelle 62.

Cet ensemble constitue donc une seule pièce ce qui facilite la gestion de son approvisionnement et son référencement, notamment pour le service après-vente du véhicule.

Lors du montage de la bride rotulée 36, après avoir vissé les tiges 46 dans le collecteur d'échappement 12, l'opérateur place la bride 36 en position et vient visser sur l'extrémité axiale inférieure 50 de chaque tige 46 un écrou 52 équipé de son ressort 54.

Lors de son vissage sur la tige 46, l'écrou 52 tourne à l'intérieur de la coupelle 62 tout en se déplaçant vers le haut, ce qui comprime le ressort 54 axialement entre la coupelle 62 et la bride 36.

On note que, dans ce mode de réalisation, le ressort 54 et la coupelle 62 ne tournent pas lors du vissage de l'écrou 52.

## Revendications

1. Agencement (10) pour l'assemblage de la ligne d'échappement du moteur à combustion d'un véhicule automobile comportant un collecteur d'échappement (12), une conduite (16) de descente d'échappement et une bride (36) du type rotulée qui maintient l'orifice d'entrée (18) de la conduite (16) de descente d'échappement en regard de l'orifice de sortie (14) du collecteur d'échappement (12), du type dans lequel le montage de la bride (36) sur la conduite (16) de descente d'échappement comporte au moins une tige (46) dont une extrémité axiale inférieure filetée (50) porte un écrou de serrage (52), avec interposition axiale d'un élément élastique de compression (54) entre l'écrou de serrage (52) et la bride (36), **caractérisé en ce que** l'écrou (52) est serti sur l'extrémité inférieure (60) de l'élément élastique (54), l'écrou (52) étant libre en rotation par rapport à l'élément élastique (54).

2. Agencement (10) selon la revendication précédente, **caractérisé en ce que** l'élément élastique (54) est un ressort de compression, par exemple du type à boudin, et en ce que l'écrou (52) est serti sur la spire d'extrémité inférieure (60) au moyen d'une coupelle (62).

3. Agencement (10) selon la revendication précédente, **caractérisé en ce que** la coupelle (62) est sertie à l'intérieur de la spire (60).
